Europäisches Patentamt

European Patent Office

Office européen des brevets

(11) Numéro de publication: **0 246 945 B1**

## (12) FASCICULE DE BREVET EUROPEEN

(45) Date de publication de fascicule du brevet: **02.12.92** (51) Int. Cl.⁵: **G02F 1/135**, G02F 1/133

(21) Numéro de dépôt: **87401008.5**

(22) Date de dépôt: **30.04.87**

㊹ **Ecran de visualisation électrooptique, et procédé de réalisation.**

(30) Priorité: **20.05.86 FR 8607144**

(43) Date de publication de la demande:
**25.11.87 Bulletin 87/48**

(45) Mention de la délivrance du brevet:
**02.12.92 Bulletin 92/49**

(84) Etats contractants désignés:
**DE GB IT NL**

(56) Documents cités:
**EP-A- 0 102 452**
**FR-A- 2 561 423**
**US-A- 3 725 899**
**US-A- 4 021 798**

THIN SOLID FILMS, vol. 13, no. 2, 15 novembre 1972, pages 413-433, Elsevier Sequoia S.A., Lausanne, CH; M.H. FRANCOMBE: "Ferroelectric films and their device applications"

(73) Titulaire: **THOMSON-CSF**
**51, Esplanade du Général de Gaulle**
**F-92800 Puteaux(FR)**

(72) Inventeur: **Aigrain, Pierre**
**THOMSON-CSF SCPI 19, avenue de Messine**
**F-75008 Paris(FR)**
Inventeur: **Mourey, Bruno**
**THOMSON-CSF SCPI 19, avenue de Messine**
**F-75008 Paris(FR)**
Inventeur: **Dubois, Jean-Claude**
**THOMSON-CSF SCPI 19, avenue de Messine**
**F-75008 Paris(FR)**
Inventeur: **Hareng, Michel**
**THOMSON-CSF SCPI 19, avenue de Messine**
**F-75008 Paris(FR)**
Inventeur: **Robin, Philippe**
**THOMSON-CSF SCPI 19, avenue de Messine**
**F-75008 Paris(FR)**

(74) Mandataire: **Lepercque, Jean et al**
**THOMSON-CSF SCPI**
**F-92045 PARIS LA DEFENSE CEDEX 67(FR)**

## Description

L'invention concerne un écran de visualisation électrooptique et son procédé de réalisation et plus particulièrement un écran plat de visualisation à commande matricielle. Elle est applicable à la réalisation d'écrans plats à cristal liquide de grande surface dont les points de commande se font par intégration sous forme de couches minces.

Comme il est connu, les écrans de visualisation comportent généralement un grand nombre de points élémentaires ou d'éléments d'image de forme carrée ou rectangulaire. Ces éléments d'image doivent être adressés individuellement. La définition de l'écran est fonction du nombre de points susceptibles de recevoir une information. La commande de chaque point se fait par application d'un champ électrique à travers le cristal liquide. Pour la visualisation d'informations alphanumériques ou graphiques, il a été proposé des affichages de type matriciel. Chaque élément d'image est alors défini par l'intersection de deux réseaux de conducteurs orthogonaux appelés lignes et colonnes.

L'adressage de ces écrans matriciels de visualisation revêt une importance de plus en plus considérable au fur et à mesure qu'on cherche à en augmenter la définition, c'est-à-dire le nombre des points élémentaires d'image.

Les points élémentaires étant adressés séquentiellement ligne par ligne, le nombre de lignes pouvant être adressés est en général limité par les caractéristiques de l'effet électrooptique du cristal liquide utilisé. La possibilité d'adresser un grand nombre de lignes (>100) se fait alors au détriment des autres caractéristiques de l'écran (diminution du contraste et augmentation de la dépendance angulaire).

Pour améliorer les performances de ces écrans, on peut mettre en série avec chaque élément d'image, un élément non linéaire dont l'impédance électrique varie :

- soit en fonction de la tension appliquée à ses bornes, telle qu'une varistance en oxyde de zinc comme cela est décrit dans l'article de A.C. CASTLEBERRY et al publié dans SID 1980 Technical Digest, ou bien en utilisant un élément MIM comme décrit dans l'article de K. NIWA et al publié dans SID 1984 Technical Digest, ou encore en utilisant des diodes têtes bêches comme décrit dans l'article de N. SZYDLO et al publié dans Japan Display 83 Technical Digest ;
- soit en fonction d'une tension de commande en utilisant des transistors en couches minces comme cela est décrit dans l'article de T.P. BRODY et al publié dans IEEE Electron Devices ED 20995 (1973).

Actuellement, les exigences de la technique en matière d'écran de visualisation portent sur une meilleure définition possible de l'image. Dans le cas des écrans du type à affichage matriciel, on est alors amené à concevoir des dispositifs comportant un nombre élevé de lignes ou de colonnes d'adressage. Leur nombre peut aller jusqu'à 1024 voire au-delà. Ceci augmente d'autant le nombre d'éléments de commande. Pour la fabrication en série, il est nécessaire notamment d'obtenir un rendement élevé, une bonne reproductibilité et une grande stabilité de ces composants. Il est en outre nécessaire d'adapter, et ce également avec une bonne reproductibilité, les caractéristiques électriques du composant à celle de la cellule associée.

La présente invention concerne un écran de visualisation plus facile à réaliser et permettant des écrans de grandes dimensions.

Plus particulièrement, elle concerne un écran de visualisation électrooptique comportant :

- une première et une deuxième lames parallèles enserrant un matériau électrooptique ;
- la première lame étant munie sur sa face en contact avec le matériau électrooptique d'une matrice d'électrodes arrangées en lignes et colonnes, de conducteurs de commande de lignes à raison d'un conducteur associé à chaque ligne d'électrodes de ladite matrice et disposé parallèlement à chaque ligne d'électrodes ; chaque électrode étant couplée électriquement par un élément de couplage au conducteur de commande de ligne auquel elle est associée ; chaque élément de couplage étant formé par deux électrodes placées de chaque côté d'une couche de matériau isolant ;
- la deuxième lame étant munie sur sa face en contact avec le matériau électrooptique de conducteurs de colonnes correspondant chacun à une colonne de la matrice d'électrodes de la face de la première lame ;
caractérisé en ce que la couche de matériau isolant de chaque élément de couplage est en matériau ferroélectrique et ne couvre qu'une indentation de l'électrode correspondante.

L'invention concerne également un procédé de réalisation d'un écran de visualisation électrooptique selon l'une quelconque des revendications précédentes, caractérisé en ce qu'il comporte les étapes suivantes :

- une première étape de réalisation sur un substrat d'électrodes en matériau conducteur comportant chacune une indentation ;

- une deuxième étape de réalisation d'une couche d'un matériau ferroélectrique sur toutes les électrodes ;
- une troisième étape de gravure de la couche de matériau ferroélectrique qui ne laisse subsister une couche de matériau ferroélectrique uniquement que sur l'indentation de chaque électrode ;
- une quatrième étape de réalisation d'une couche d'un matériau conducteur ;
- une cinquième étape de découpe dans la couche de matériau conducteur déposée au cours de la quatrième étape, d'au moins un conducteur de commande de colonne recouvrant au moins un élément en matériau ferroélectrique et une portion d'électrode se trouvant sous ledit élément en matériau ferroélectrique.

Les différents objets et caractéristiques de l'invention apparaîtront plus clairement dans la description qui va suivre, faite en se reportant aux figures annexées qui représentent :
- la figure 1, un exemple de réalisation d'une portion d'écran de visualisation selon l'invention ;
- la figure 2, une vue de dessus de la portion d'écran de la figure 1 ;
- la figure 3, un cycle d'hystérésis d'un matériau ferroélectrique ;
- les figures 4 à 8, des schémas électriques de fonctionnement de la portion d'écran de la figure 1 ;
- la figure 9, un schéma électrique équivalent d'un écran de visualisation selon l'invention ;
- la figure 10, un diagramme de temps illustrant un fonctionnement d'un écran de visualisation selon l'invention ;
- les figures 11 à 17, différentes phases d'un procédé de fabrication selon l'invention.
- les figures 18 et 19, un exemple de réalisation d'une variante d'une portion d'écran de visualisation selon l'invention.

L'invention concerne un écran de visualisation électrooptique comprenant en série avec chaque élément d'image, un élément en matériau ferroélectrique.

Un matériau ferroélectrique présente, dans un domaine de température, une polarisation électrique spontanée P non nulle, en l'absence de champ électrique appliqué sur le matériau.

Cette polarisation spontanée est due à une orientation macroscopique des dipôles élémentaires du matériau. Le sel de Seynette possédant ces propriétés, la ferroélectricité est souvent appelée aussi Seynetto-électricité.

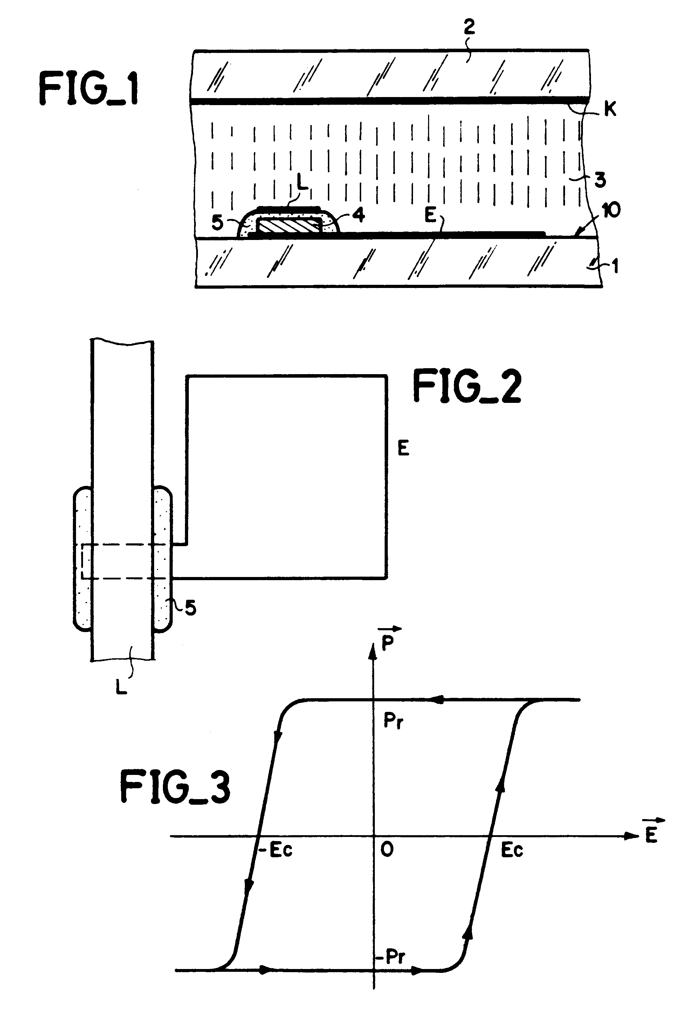

Les matériaux ferroélectriques sont caractérisés par le cycle d'hystérésis qui existe entre le champ électrique E appliqué et la polarisation P (comme cela est représenté en figure 3). Les paramètres principaux de ces cycles sont :

Pr ou $-P_r$ = polarisation rémanente dans le matériau sans champ électrique ;

Ec ou -Ec = champ coercitif qui est le champ électrique qu'il faut appliquer pour annuler la polarisation rémanente $P_r$ qui existait dans le matériau.

Pour une oscillation du champ électrique entre deux valeurs ±Em, on obtient un retournement périodique des dipôles du matériau.

Les matériaux ferroélectriques peuvent être soit des cristaux inorganiques tels que le sel de Seynette, $B_aTiO_3$ ou $KPO_4H_2$, soit des polymères tels que le poly-vinylidène difluoré (PVDF) ou des copolymères de vinylidène difluoré - trifluoro d'éthylène P (VDF.$T_r$F).

L'exemple de réalisation de l'invention utilise des polymères ferroélectriques commandant un cristal liquide ils peuvent être utilisés sur de grandes surfaces et en faible épaisseur, donc avec des faibles tensions de commande compatibles avec le cristal liquide.

Les figures 1 et 2 représentent un exemple de réalisation selon l'invention d'un élément de commande d'un écran à cristal liquide.

Sur la figure 1, on trouve deux lames parallèles 1 et 2 enserrant un matériau électrooptique tel qu'un cristal liquide 3. Dans le cas où l'écran fonctionne en transmission, les deux lames sont en matériau transparent tel que du verre. Dans le cas où il fonctionne en réflexion, l'une des lames au moins, 2 par exemple, est transparente.

Sur la face de la lame 2 en contact avec le cristal liquide 3, sont diposés des électrodes de colonnes telle que K.

Sur la face 10, de la lame 1, en contact avec le cristal liquide 3, sont disposées des électrodes E correspondant chacune à un élément image (ou pixel). Ces électrodes E sont associées à des conducteurs de commande de ligne tel que L.

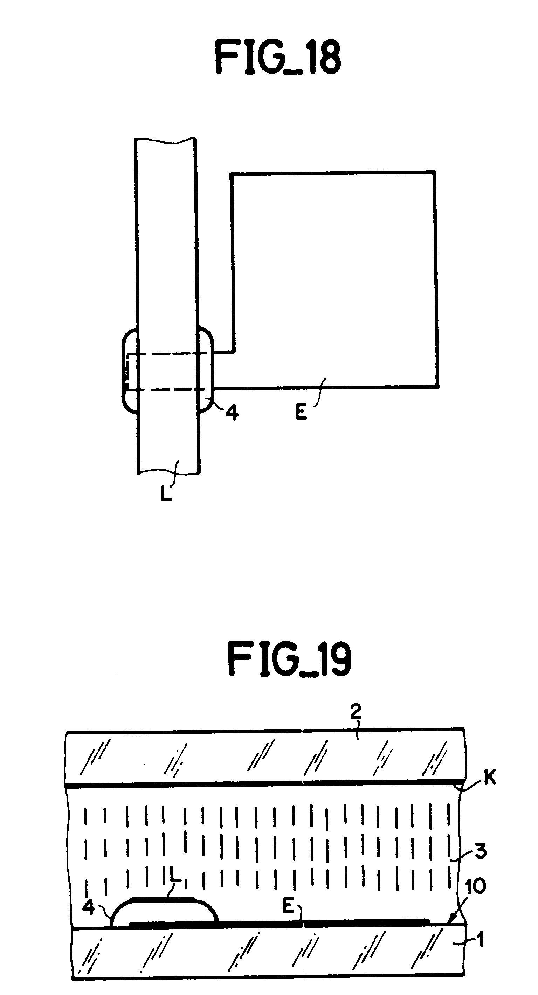

Selon l'invention, le couplage d'une électrode E et d'un conducteur est réalisé par l'intermédiaire d'un élément en matériau ferroélectrique 4. Cet élément 4 est recouvert d'une couche d'isolant 5 pour l'isoler du cristal liquide 3. Cependant, cela n'est pas une obligation dans le cas ou l'isolant n'est pas attaqué par le cristal liquide 3. Dans ce cas on aura une variante de réalisation telle que représentée par les figures 18 et 19 dans lesquelles les mêmes références sont affectées aux mêmes éléments que dans les figures 1 et 2 et où l'élément en matériau ferroélectrique 4 connecte directement le conducteur L à l'électrode E.

La commande d'un élément image se fera donc par application d'une tension entre une électrode de colonne K et un conducteur de ligne L. Le circuit électrique de commande comprendra donc en série : l'électrode de colonne K, le cristal liquide 3, l'électrode E, le matériau ferroélectrique 4, une mince couche d'isolant 5, le conducteur de ligne L.

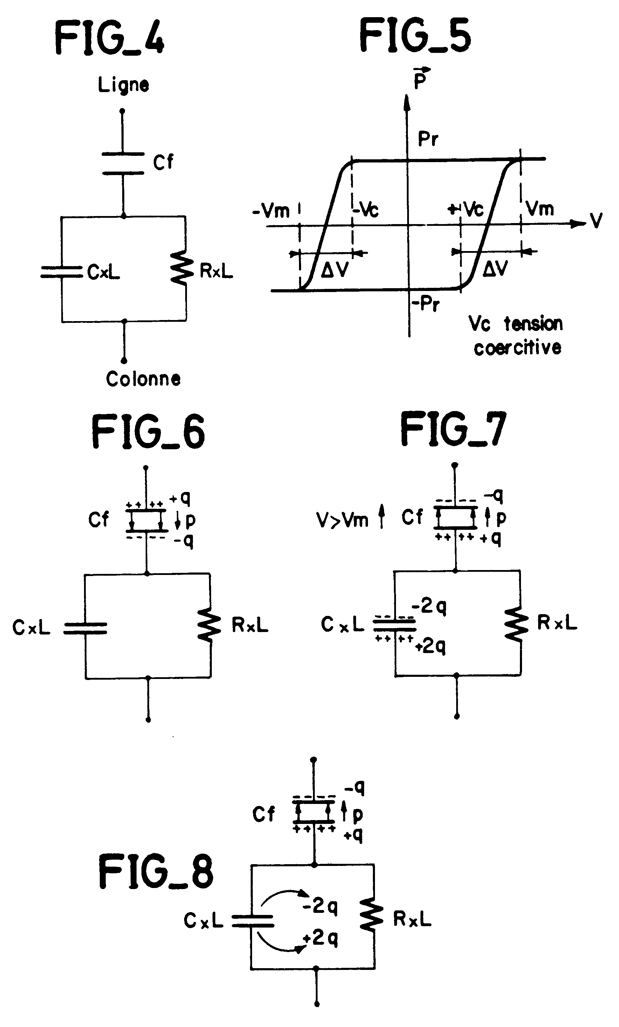

La figure 4 représente un schéma électrique d'un tel élément d'image de l'écran de visualisation décrit dans cette demande.

A l'intersection d'une ligne et d'une colonne, on trouve donc en série le matériau ferroélectique représenté par sa capacité Cf et dont le cycle d'hystérésis est rappelé en figure 5, et le matériau électrooptique (par exemple du cristal liquide) représenté par sa capacité $C_{XL}$ et sa résistance $R_{XL}$.

Le principe général de fonctionnement d'un tel écran consiste à utiliser le matériau ferroélectrique comme une source de charge électrique commandable électriquement.

En effet, lorsqu'on applique sur le matériau ferroélectrique une tension V aux bornes de l'ensemble, telle que V > Vm et de sens opposé au sens initial des dipôles, ceux-ci se retournent et font apparaître une variation de charge électrique Q = 2PrSf (Sf = surface de la capacité Cf) pour annuler le champ électrique induit par ces dipôles. Si les dipôles sont orientés dans le matériau ferroélectrique comme cela est représenté en figure 6, on obtient un retournement des dipôles comme représenté en figure 7.

Cette charge apparaît aussi sur le cristal liquide et induit sur celui-ci une tension :

$$V_{XL} = \frac{2 P_r S_f}{C_{XL}}$$

qui peut être insuffisante pour le commuter. Cela est représenté en figure 3.

Ces charges accumulées sur le cristal liquide, se déchargent ensuite à travers la résistance $R_{XL}$ dans un temps caractéristique t = $R_{XL}$ $C_{XL}$, à condition que le temps caractéristique de décharge de l'élément ferroélectrique soit grand devant le temps de trame (ce qui est généralement le cas).

Le matériau ferroélectrique est donc bien une source de courant commandable électriquement. En effet, si une tension V < $V_m$ est appliquée sur celui-ci, il n'y aura pas retournement des dipôles ; la charge $Q_c$ = $2p_rS_f$ n'apparaîtra pas et les tensions développées sur le cristal liquide seront faibles.

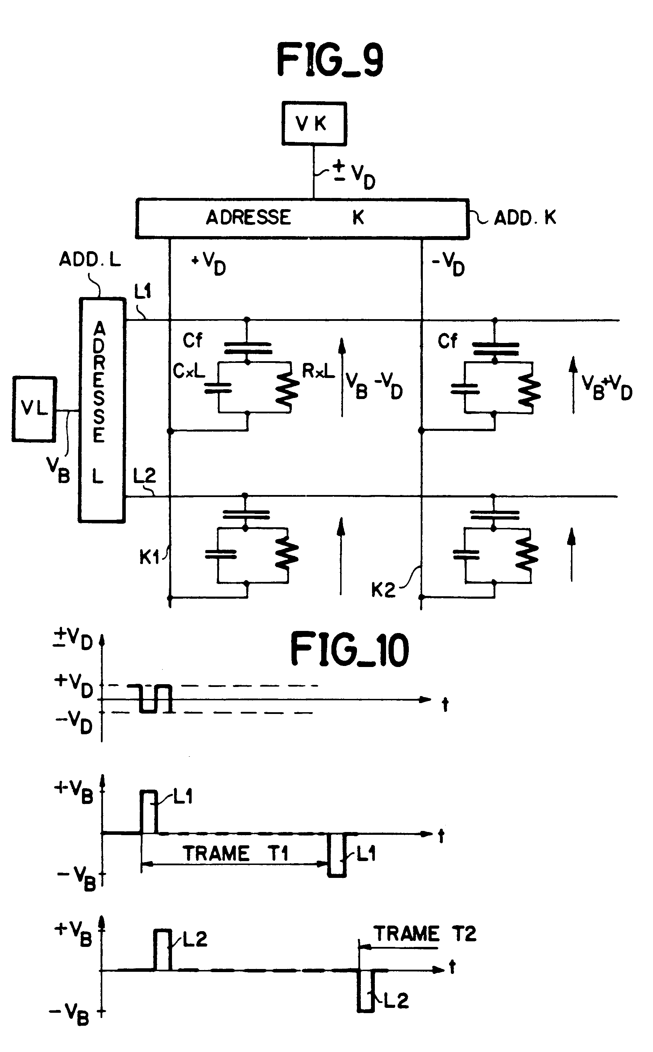

La figure 9 représente un schéma électrique équivalent d'un écran de visualisation selon l'invention. Les différentes cellules images de l'écran de visualisation sont arrangées en matrice de lignes et colonnes et sont commandées par des fils de lignes L1, L2 et des fils de colonnes K1, K2. Une cellule image est placée à chaque point de croisement d'un fil de ligne et d'un fil de colonne. Chaque cellule image a été représentée sous la forme de son schéma électrique équivalent expliqué précédemment en relation avec les figures 1 à 8.

Les fils de lignes sont adressés par un circuit 7 d'adresse ADD.L qui permet de connecter une source de tension VL à l'un quelconque des fils de ligne L1, L2.

Les fils de colonnes sont adressés par un circuit d'adresse ADD.K qui permet de connecter une source de tension VK à l'ensemble des fils de colonnes K1, K2.

Le circuit ADD.L permet d'appliquer au cours d'une trame donnée un potentiel $+V_B$ ou $-V_B$, appelée tension de balayage, sur un fil de ligne à adresser. Les autres fils de lignes sont maintenus à un potentiel nul. On donnera aux potentiels $+V_B$ et $-V_B$ les valeurs $+V_c$ et $-V_c$ indiquées sur la figure 5.

Par ailleurs, ces circuits permettent d'appliquer sur les fils de colonnes une tension comprise entre $+V_D$ ou $-V_D$ selon le fil de colonne de façon à exciter ou non les points de croisement situés à l'intersection du fil de ligne adressé et des différents fils de colonnes. On choisira pour la valeur absolue de la tension $V_D$, la valeur $\Delta V/2$ indiquée sur la figure 5.

Durant une trame donnée T1, comme cela est représenté en figure 10, la tension $+V_B$ est appliquée successivement sur toutes les lignes de l'écran. Durant chaque impulsion appliquée à une ligne (L1, L2...), les fils de colonnes reçoivent un potentiel compris entre $+V_D$ et $-V_D$ selon la nature de l'information à appliquer à chaque point de croisement entre lignes et colonnes.

En choisissant Cf $C_{XL}$ et Rf Rxl, ce qui est toujours possible en diminuant la surface de la capacité du matériau ferroélectrique par rapport à celle du cristal liquide, les tensions $V_B + V_D$, $V_B - V_D$, $\pm V_D$ se reporteront intégralement sur le ferroélectrique.

En particulier, pendant le temps d'adressage

$$V_B + V_D = V_c + \frac{\Delta V}{2}$$

se reportera entièrement sur le ferroélectrique qui commutera et fera apparaître la tension

$$v = \frac{2P_r S_f}{C_{XL}}$$

sur le cristal liquide.

La tension $V_B - V_D = V_c - \frac{\Delta V}{2}$ quant à elle, ne fera pas commuter le ferroélectrique et aucune tension n'apparaîtra sur le cristal liquide.

Pendant le reste du temps trame, les tensions $\pm V_D$, qui sont appliquées sur l'ensemble cristal liquide et ferroélectrique, s'appliqueront presque entièrement sur le matériau ferroélectrique du fait du rapport de capacité Cf/Cc.

Pendant une trame un point non excité verra donc une tension pratiquement nulle, un point excité verra à ces bornes une tension

$$V = \frac{2P_r S_f}{C_{XL}}$$

Pendant le temps d'adressage, cette tension se décharge avec un temps caractéristique = $R_{XL} C_{XL}$.

Durant la trame suivante T2, les tensions d'adressage sont inversées comme cela est représenté en figure 10. C'est ainsi que la ligne L1 qui avait été adressée à un potentiel $+V_B$ lors d'une première trame T1 est adressée par un potentiel $-V_B$ lors de la trame suivante T2. Les tensions $+V_D$ et $-V_D$ appliquées aux fils de colonnes sont également inversées pour une même information affichée.

De plus, cette inversion de tension permet d'appliquer sur le cristal liquide, une tension à moyenne nulle ce qui bloque les effets de dégradations électrochimiques du cristal liquide.

A titre d'exemple, l'invention peut être réalisée avec les valeurs numériques suivantes.

En prenant Sf = 100 $\mu$m$^2$, ef = 1 $\mu$m
et Sxl = 10$^5$ $\mu$m$^2$ et $e_{XL}$ = 10 $\mu$m
ce qui correspond à un pas d'écran d'environ 350 $\mu$m, on a :

$$\frac{C_f}{C_{XL}} \quad \frac{1}{100} \frac{S_f}{S_{xc}} = \frac{1}{1000}$$

La tension induite par le retournement des dipôles vaut donc :

$$v = \frac{2P_{rf} S_f}{C_e} = \frac{2P_r e_f}{f \ o} \times \frac{C_f}{C_{xc}} = 20 \text{ volts}$$

ce qui correspond pour un temps caractéristique du cristal liquide de 10 ms et un temps trame de 20 ms à une tension moyenne sur le cristal liquide d'environ 5 Volts.

Compte tenu des champs coercitifs dans le matériau ferroélectrique (50 MV/m) en utilisant un copolymère P (VDF.TrF), les tensions d'adressage $V_B$ et $V_D$ doivent être égales à :

$V_B$ = Vc = 50 volts
$V_D$ = 10 volts.

Dans ce cas, la tension moyenne appliquée sur le cristal liquide due au rapport capacitif sera de l'ordre de 0,1 volts

$$\left(\frac{C_f}{C_{xL}} \times v_D\right),$$

soit près de 50 fois inférieur à la tension introduite par le retournement des dipôles.

Bien sûr cet exemple n'est pas limitatif. En particulier, on pourra ajuster les surface du ferroélectrique et du cristal liquide pour que les paramètres correspondent à l'effet électrooptique utilisé dans le cristal liquide.

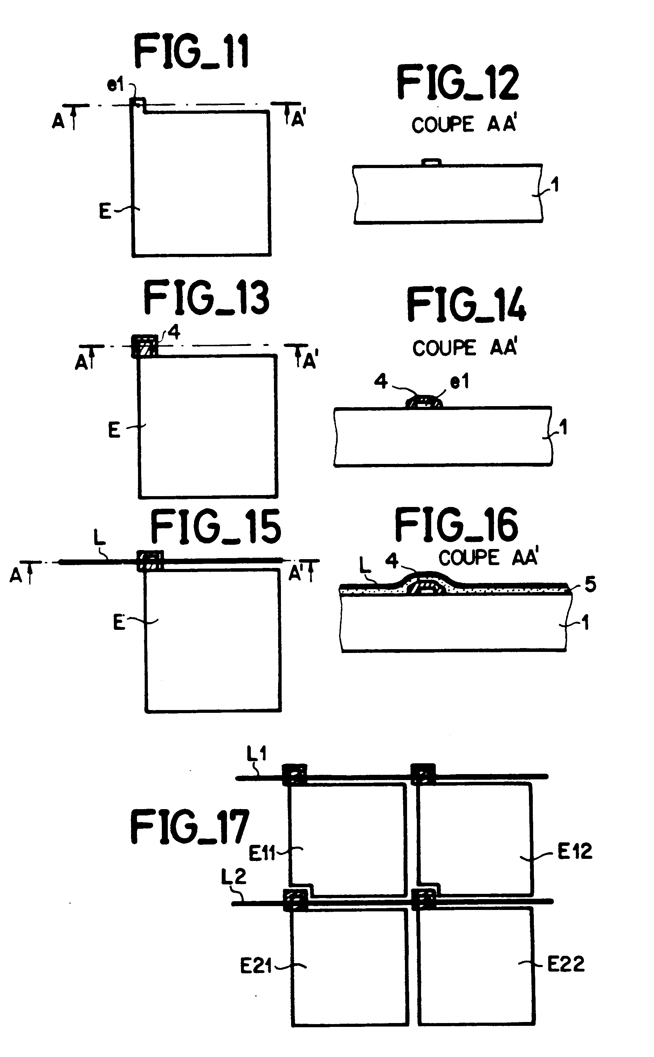

En se reportant aux figures 11 à 17, on va maintenant décrire un exemple de procédé de réalisation selon l'invention d'un écran de visualisation électrooptique tel que décrit précédemment.

Au cours d'une première étape, on réalise sur un substrat tel qu'une plaque de verre 1, un dépôt d'une couche mince d'un matériau conducteur, transparent ou réfléchissant selon que l'écran devra fonctionner en transmission ou en réflexion. Puis, on grave, par exemple par photolithogravure, dans cette couche mince, des électrodes E ou éléments images. Chaque électrode E comporte une indentation e1 et se présente comme cela est représenté par les figures 11 et 12.

Au cours d'une deuxième étape, on réalise un dépôt d'une couche d'un matériau ferroélectrique sur toutes les électrodes E. Ce dépôt est réalisé par exemple sous l'effet d'une foce centrifuge élevée pour obtenir une couche mince d'épaisseur uniforme. L'épaisseur de cette couche sera par exemple de 1 micromètre. Le matériau sera, par exemple, comme mentionné précédemment soit un polymère (tel que PVDF) ou un copolymère tel que P (VDF.TrF). Le champ coercitif du copolymère est de l'ordre de 50 MV/m et la polarisation spontanée de l'ordre de P = 0,1 mC/m$^2$. Au cours d'une troisième étape, on réalise une gravure de la couche de matériau ferroélectrique précédemment déposée pour obtenir des élements 4 en matériau ferroélectrique recouvrant chaque indentation e1 des électrodes E. Cette gravure est réalisée par exemple par attaque plasma. On obtient ainsi une structure telle que représentée en figures 13 et 14.

Au cours d'une quatrième étape, on réalise une couche d'un matériau isolant pour isoler le matériau ferroélectrique du matériau électrique qui devra être commandé par l'électrode E.

Le matériau isolant peut être par exemple, un nitrure de silicium (Si$_3$N$_4$) et le dépôt peut être alors réalisé par dépôt en phase vapeur (CVD) assisté plasma de silicium en présence d'azote.

Le matériau isolant peut être aussi un polymère PVA (polyvinyl alcool).

Ensuite, on grave la couche de matériau isolant par attaque plasma ou chimique de façon à ne conserver que la couche d'isolant 5 juste nécessaire pour recouvrir chaque élément 4 en matériau ferroélectrique. Cependant cette gravure n'est pas obligatoire et la couche d'isolant peut alors servir de couche d'ancrage pour le cristal liquide.

Au cours d'une cinquième étape, on réalise une couche d'un matériau conducteur. Cette couche peut être par exemple de l'aluminium et être déposée sous vide.

Au cours d'une sixième étape on découpe, dans la couche de matériau conducteur qui vient d'être déposée, des conducteurs de commande de colonne K recouvrant un ou plusieurs éléments 5 et éléments ferroélectriques 4 ainsi que les indentations e1 des électrodes E se trouvant sous les éléments 5.

On obtient ainsi une structure telle que représentée sur les figures 15 et 16. Sur la coupe AA' de la figure 16, l'élément en matériau isolant 5 recouvre non seulement l'élément en matériau ferroélectrique 4 mais aussi une grande partie de la surface du substrat 1. Cela n'est pas obligatoire. Il suffit que le matériau isolant recouvre entièrement l'élément ferroélectrique 4 pour le soustraire ultérieurement du contact du matériau électrooptique. En effet, dans le cas où le matériau électrooptique est un cristal liquide, celui-ci peut avoir une action chimique sur le matériau ferroélectrique. Celui-ci peut être dissout par le cristal liquide et perdre ses propriétés électriques.

Appliqué à la réalisation d'un écran à cristal liquide, le procédé de l'invention permet d'obtenir une configuration représentée en figure 17.

A ce stade, la réalisation de l'écran retrouve la technologie des cellules à cristal liquide :

- Sur la contre lame (deuxième lame de verre 2), on grave une couche d'ITO (oxyde d'étain et d'indium) qui constitue les lignes de la matrice.

- On dépose sur les deux lames une couche d'orientation des molécules (polymère frotté de SiO évaporé).

Ainsi, selon l'invention, l'utilisation de l'association d'un polymère ferroélectrique et d'un cristal liquide dans un écran de visualisation de type matriciel permet d'appliquer sur le cristal liquide une tension électrique indépendante de la tension d'adressage des colonnes.

Cet écran est beaucoup plus simple de réalisation que celui utilisant des transistors en couche mince et utilise un élément de commande permettant des dépôts sur des grandes surfaces.

Il est à noter que les formes de réalisation et les exemples numériques n'ont été données qu'à titre d'exemple pour illustrer la description et que d'autres variantes et valeurs numériques peuvent conduire à des réalisations ne sortant pas du cadre de l'invention.

**Revendications**

1. Ecran de visualisation électrooptique comportant :
   - une première et une deuxième lames parallèles (1,2) enserrant un matériau électrooptique (3) ;
   - la première lame (1) étant munie sur sa face (10) en contact avec le matériau électrooptique (3) d'une matrice d'électrodes (E11 à E22) arrangées en lignes et colonnes, de conducteurs de commande de lignes (L) à raison d'un conducteur associé à chaque ligne d'électrodes de ladite matrice et disposé parallèlement à chaque ligne d'électrodes ; chaque électrode (E11 à E22) étant couplée électriquement par un élément de couplage (4) au conducteur de commande de ligne auquel elle est associée ; chaque élément de couplage (4) étant formé par deux électrodes placées de chaque côté d'une couche de matériau isolant ;
   - la deuxième lame (2) étant munie sur sa face (20) en contact avec le matériau électrooptique (3) de conducteurs de colonnes (K) correspondant chacun à une colonne de la matrice d'électrodes (E11 à E22) de la face (10) de la première lame (1) ; caractérisé en ce que la couche de matériau isolant de chaque élément de couplage (4) est en matériau ferroélectrique et ne couvre qu'une indentation (e1) de l'électrode (E) correspondante.

2. Ecran de visualisation électrooptique selon la revendication 1, caractérisé en ce que ladite couche de matériau isolant desdits éléments (4) de couplage est en matériau polymère ferroélectrique.

3. Ecran de visualisation électrooptique selon la revendication 2, caractérisé en ce que le matériau polymère est en un polymère de vinylidène.

4. Ecran de visualisation électrooptique selon la revendication 2, caractérisé en ce que le matériau polymère est un copolymère de vinylidène difluorétrifluoro d'éthylène (P(VDF.Trf)).

5. Ecran de visualisation électrooptique selon l'une quelconque des revendications précédentes, caractérisé en ce qu'il comprend des moyens électriques permettant d'appliquer sélectivement entre un conducteur de ligne (L) déterminé et un conducteur de colonne (K) déterminé, une différence de potentiel (V) supérieure à la tension coercitive (Vc) de l'ensemble élément ferroélectrique et cristal liquide situé entre ledit conducteur de ligne (L) et ledit conducteur de colonne (K), cette différence de potentiel V étant supérieure à ladite tension coercitive (Vc) d'une valeur de différence (△V) telle qu'elle dépasse une valeur de tension (Vm) déterminant une polarisation rémanente dans l'élément ferroélectrique.

6. Ecran de visualisation électrooptique selon la revendication 5, caractérisé en ce que lesdits moyens électriques permettent d'appliquer sélectivement aux conducteurs de ligne (L) une différence de potentiel égale à ladite tension coercitive (Vc) tandis qu'ils permettent d'appliquer sélectivement aux conducteurs de colonne (K) ladite valeur de différence (△V).

7. Ecran de visualisation électrooptique selon la revendication 6, caractérisé en ce que lesdits moyens électriques permettent d'appliquer sélectivement aux conducteurs de colonne (K) une différence de potentiel égale à ladite tension coercitive (Vc) tandis qu'ils permettent d'appliquer sélectivement aux conducteurs de ligne (L) ladite valeur de différence (△V).

8. Ecran de visualisation électrooptique selon la revendication 5, possédant une succession de temps d'affichage, caractérisé en ce que lesdits moyens électriques permettent d'inverser le sens d'application de ladite différence de potentiel (V), d'un temps d'affichage au suivant.

9. Ecran de visualisation électrooptique selon la revendication 8, caractérisé en ce que lesdits moyens électriques permettent d'inverser d'une ligne à la ligne suivante les tensions appliquées.

**10.** Ecran de visualisation électrooptique selon la revendication 1, caractérisé en ce que chaque élément de couplage (4) en matériau ferroélectrique est recouvert d'une mince couche de matériau isolant (5).

**11.** Ecran de visualisation électrooptique selon la revendication 10, caractérisé en ce que la couche de matériau isolant (5) recouvre également l'ensemble de la lame (1) avec les électrodes (E) et les conducteurs de ligne (L).

**12.** Procédé de réalisation d'un écran de visualisation électrooptique, caractérisé en ce qu'il comporte les étapes suivantes :
- une première étape de réalisation sur un substrat (1) d'électrodes (E) en matériau conducteur comportant chacune une indentation (e1) ;
- une deuxième étape de réalisation d une couche d'un matériau ferroélectrique sur toutes les électrodes (E) ;
- une troisième étape de gravure de la couche de matériau ferroélectrique qui ne laisse subsister une couche de matériau ferroélectrique uniquement que sur l'indentation (e1) de chaque électrode (E) ;
- une quatrième étape de réalisation d'une couche d'un matériau conducteur ;
- une cinquième étape de découpe dans la couche de matériau conducteur déposée au cours de la quatrième étape, d'au moins un conducteur de commande de colonne (K) recouvrant au moins un élément en matériau ferroélectrique (4) et une portion (e1) d'électrode (E) se trouvant sous ledit élément en matériau ferroélectrique (4).

**13.** Procédé selon la revendication 12, caractérisé en ce qu'il comporte, entre la troisième étape et la quatrième étape, une étape supplémentaire de dépôt d une couche d'un matériau isolant (5).

**14.** Procédé selon la revendication 13, caractérisé en ce que ladite étape supplémentaire comporte une phase de découpe dans la couche de matériau isolant d'éléments (5) en matériau isolant recouvrant les éléments (4) en matériau ferroélectrique.

**15.** Procédé selon la revendication 12, caractérisé en ce que les électrodes (E11, E22) sont réalisées sous forme matricielle.

**16.** Procédé selon la revendication 1, caractérisé en ce que le matériau électrooptique est un cristal liquide.

**Claims**

**1.** An electro-optical display screen comprising:
- a first and a second parallel plates (1, 2) enclosing an electro-optical material (3);
- the first plate (1) being provided, on its face (10) in contact with the electro-optical material (3), with a matrix of electrodes (E11 to E22) arranged in lines and columns, with line control conductors (L) at the rate of one conductor associated with each line of electrodes of said matrix and disposed parallel to each line of electrodes; each electrode (E11 to E22) being electrically coupled by a coupling element (4) to the line control conductor with which it is associated; each coupling element (4) being formed of two electrodes placed on either side of a layer of insulating material;
- the second plate (2) being provided, on its face (20) in contact with the electro-optical material (3), with column conductors (K) each corresponding to one column of the matrix of electrodes (E11 to E22) of the face (10) of the first plate (1);
characterised in that the layer of insulating material of each coupling element (4) is made of ferroelectric material and covers only one indentation (e1) of the corresponding electrode (E).

**2.** An electro-optical display screen according to Claim 1, characterised in that said layer of insulating material of said coupling elements (4) is made of ferroelectric polymer material.

**3.** An electro-optical display screen according to Claim 2, characterised in that the polymer material is a vinylidene polymer.

**4.** An electro-optical display screen according to Claim 2, characterised in that the polymer material is a

EP 0 246 945 B1

vinylidene fluoride-trifluoroethylene copolymer (P(VDF.Trf)).

5. An electro-optical display screen according to any one of the preceding claims, characterised in that it comprises electrical means making it possible to apply selectively, between a given line conductor (L) and a given column conductor (K), a potential difference (V) greater than the coercive voltage (Vc) of the assembly of ferroelectric element and liquid crystal situated between said line conductor (L) and said column conductor (K), this potential difference in being greater than said coercive voltage (Vc) by a difference value (△V) such that it exceeds a voltage value (Vm) determining a residual polarisation in the ferroelectric element.

6. An electro-optical display screen according to Claim 5, characterised in that said electrical means allow a potential difference equal to said coercive voltage (Vc) to be applied selectively to the line conductors (L) whereas they allow said difference value (△V) to be applied selectively to the column conductors (K).

7. An electro-optical display screen according to Claim 6, characterised in that said electrical means allow a potential difference equal to said coercive voltage (Vc) to be applied selectively to the column conductors (K) whereas they allow said difference value (△V) to be applied selectively to the line conductors (L).

8. An electro-optical display screen according to Claim 5, having a succession of display periods, characterised in that said electrical means allow the direction of application of said potential difference (V) to be inverted from one display period to the next.

9. An electro-optical display screen according to Claim 8, characterised in that said electrical means allow the voltages applied to be inverted from one line to the following line.

10. An electro-optical display screen according to Claim 1, characterised in that each coupling element (4) made of ferroelectric material is covered with a thin layer of insulating material (5).

11. An electro-optical display screen according to Claim 10, characterised in that the layer of insulating material (5) also covers the whole plate (1) with the electrodes (E) and the line conductors (L).

12. A process for producing an electro-optical display screen, characterised in that it comprises the following steps:
    - a first step of producing, on a substrate (1), electrodes (E) made of conducting material each comprising an indentation (e1);
    - a second step of producing a layer of a ferroelectric material over all the electrodes (E);
    - a third step of engraving on the layer of ferroelectric material which leaves a layer of ferroelectric material only on the indentation (e1) of each electrode (E);
    - a fourth step of producing a layer of conducting material;
    - a fifth step of cutting out, from the layer of conducting material deposited during the fourth stage, at least one column control conductor (K) covering at least one element made of ferroelectric material (4) and one portion (e1) of electrode (E) located under said element made of ferroelectric material (4).

13. A process according to Claim 12, characterised in that it comprises, between the third step and the fourth step, an extra step of depositing a layer of insulating material (5).

14. A process according to Claim 13, characterised in that said extra step comprises a phase of cutting out, from the layer of insulating material, elements (5) made of insulating material covering the elements (4) made of ferroelectric material.

15. A process according to Claim 12, characterised in that the electrodes (E11, E22) are produced in matrix form.

16. A process according to Claim 1, characterised in that the electro-optical material is a liquid crystal.

9

**Patentansprüche**

1. Elektrooptischer Bildschirm mit zwei zueinander parallelen Lamellen (1,2), die zwischen sich ein elektrooptisches Material (3) einschließen,
   - wobei die erste Lamelle (1) auf ihrer Oberseite (10) in Kontakt mit dem elektrooptischen Material (3) eine Matrix von Elektroden (E11 bis E22), die in Zeilen und Spalten angeordnet sind, und Zeilensteuerleiter (L) aufweist, und zwar einen Leiter für jede Elektrodenzeile der Matrix und parallel zu jeder Elektrodenzeile angeordnet, wobei jede Elektrode (E11 bis E21) elektrisch über ein Koppelelement (4) an den Zeilensteuerleiter gekoppelt ist, dem sie zugeordnet ist, wobei jedes Koppelelement (4) von zwei zu beiden Seiten einer Schicht aus Isoliermaterial liegenden Elektroden gebildet wird,
   - während die zweite Lamelle (2) auf ihrer Seite (20) in Kontakt mit dem elektrooptischen Material (3) Spaltenleiter (K) aufweist, die je einer Spalte der Matrix von Elektroden (E11 bis E22) auf der Oberseite (10) der ersten Lamelle (1) aufweist, dadurch gekennzeichnet, daß die Schicht aus Isoliermaterial in jedem Koppelelement (4) aus einem ferroelektrischen Material besteht und nur einen Vorsprung (e1) der entsprechenden Elektrode (E) bedeckt.

2. Elektrooptischer Bildschirm nach Anspruch 1, dadurch gekennzeichnet, daß die Schicht aus Isoliermaterial der Koppelelemente aus einem ferroelektrischen Polymermaterial besteht.

3. Elektrooptischer Bildschirm nach Anspruch 2, dadurch gekennzeichnet, daß das Polymermaterial ein Vinylidenpolymer ist.

4. Elektrooptischer Bildschirm nach Anspruch 2, dadurch gekennzeichnet, daß das Polymermaterial ein Kopolymer ein Vinyliden-Difluor-Trifluor-Äthylenkopolymer (P(VDF.Trf) ist.

5. Elektrooptischer Bildschirm nach einem beliebigen der vorhergehenden Ansprüche, dadurch gekennzeichnet, daß er elektrische Mittel aufweist, um selektiv zwischen einem bestimmten Zeilenleiter (L) und einem bestimmten Spaltenleiter (K) ein Potentialdifferenz (V) anzulegen, die größer als die Koerzitivspannung (Vc) der zwischen dem Zeilenleiter (L) und dem Spaltenleiter (K) liegenden Einheit aus ferroelektrischem Element und Flüssigkristall ist, wobei diese Potentialdifferenz (V) um einen solchen Differenzwert ($\triangle$V) größer als die Koerzitivspannung (Vc) ist, daß dieses Differenzpotential einen Spannungswert (Vm) überschreitet, der eine remanente Polarisation im ferroelektrischen Element bestimmt.

6. Elektrooptischer Bildschirm nach Anspruch 5, dadurch gekennzeichnet, daß die elektrischen Mittel selektiv an die Zeilenleiter (L) eine Potentialdifferenz gleich der Koerzitivspannung anzulegen erlauben, während sie selektiv an die Spaltenleiter (K) den erwähnten Differenzwert ($\triangle$V) anlegen.

7. Elektrooptischer Bildschirm nach Anspruch 6, dadurch gekennzeichnet, daß die elektrischen Mittel selektiv an die Spaltenleiter (K) eine Potentialdifferenz gleich der Koerzitivspannung (Vc) anzulegen vermögen, während sie selektiv an die Zeilenleiter (L) den erwähnten Differenzwert ($\triangle$V) anlegen können.

8. Elektrooptischer Bildschirm nach Anspruch 5 mit einer Folge von Anzeigephasen, dadurch gekennzeichnet, daß die elektrischen Mittel die Richtung der angelegten Potentialdifferenz (V) von einer Phase zur nächsten umkehren können.

9. Elektrooptischer Bildschirm nach Anspruch 8, dadurch gekennzeichnet, daß die elektrischen Mittel von einer Zeile zur nächsten die angelegten Spannungen umkehren können.

10. Elektrooptischer Bildschirm nach Anspruch 1, dadurch gekennzeichnet, daß jedes Koppelelement (4) aus ferroelektrischem Material mit einer dünnen Schicht aus Isoliermaterial (5) bedeckt ist.

11. Elektrooptischer Bildschirm nach Anspruch 10 dadurch gekennzeichnet, daß die Schicht aus Isoliermaterial (5) auch die Gesamtheit der Lamelle 1 mit den Elektroden (E) und die Zeilenleiter (L) bedeckt.

12. Verfahren zur Herstellung eines elektrooptischen Bildschirms, dadurch gekennzeichnet, daß folgende Verfahrensschritte durchgeführt werden:

- In einem ersten Verfahrensschritt werden auf einem Substrat (1) Elektroden (E) aus einem Leitermaterial mit je einem Vorspruch (e1) hergestellt;
- in einem zweiten Verfahrensschritt wird auf alle Elektroden (E) eine Schicht aus ferroelektrischem Material aufgebracht;
- in einem dritten Verfahrensschritt wird die Schicht aus ferroelektrischem Material selektiv geätzt, sodaß das ferroelektrische Material zur auf dem Vorsprung (e1) jeder Elektrode (E) verbleibt;
- in einem vierten Verfahrensschritt wird eine Schicht aus Leitermaterial aufgebracht;
- in einem fünften Verfahrensschritt wird aus der Schicht aus Leitermaterial, die im vierten Verfahrensschritt aufgebracht wurde, mindestens ein Spaltensteuerleiter (K) ausgeschnitten, der mindestens ein Element aus ferroelektrischem Material (4) und einen Teil (e1) der Elektrode (E) bedeckt, der sich unter dem Element aus ferroelektrischem Material (4) befindet.

13. Verfahren nach Anspruch 12, dadurch gekennzeichnet, daß zwischen dem dritten und dem vierten Verfahrensschritt in einem zusätzlichen Verfahrensschritt eine Schicht aus Isoliermaterial (5) aufgebracht wird.

14. Verfahren nach Anspruch 13, dadurch gekennzeichnet. daß im zusätzlichen Verfahrensschritt aus der Schicht von Isoliermaterial Elemente (5) aus Isoliermaterial ausgeschnitten werden, die die Elemente (4) aus ferroelektrischem Material bedecken.

15. Verfahren nach Anspruch 12, dadurch gekennzeichnet, daß die Elektroden (E11, E22,) in Matrixform ausgebildet sind.

16. Verfahren nach Anpruch 1, dadurch gekennzeichnet, daß das elektrooptische Material ein Flüssigkristall ist.

FIG_1

2

K

L

5    4    E    3

10

1

FIG_2

E

5

L

FIG_3

$\vec{P}$

Pr

-Ec    O    Ec    $\vec{E}$

-Pr

# FIG_4

Ligne

Cf

CxL          RxL

Colonne

# FIG_5

$\vec{P}$

Pr

-Vm    -Vc    +Vc    Vm    V

ΔV              ΔV

-Pr

Vc tension coercitive

# FIG_6

Cf    +q    p    -q

CxL          RxL

# FIG_7

V>Vm    Cf    -q    p    +q

CxL    -2q    +2q    RxL

# FIG_8

Cf    -q    p    +q

CxL    -2q    +2q    RxL

# FIG_9

# FIG_10

14

# FIG_11

# FIG_12
## COUPE AA'

# FIG_13

# FIG_14
## COUPE AA'

# FIG_15

# FIG_16
## COUPE AA'

# FIG_17

# FIG_18

# FIG_19